(19)

Europäisches Patentamt
European Patent Office
Office européen des brevets

(11) **EP 4 376 127 A1**

(12) **EUROPEAN PATENT APPLICATION**
published in accordance with Art. 153(4) EPC

(43) Date of publication:
**29.05.2024 Bulletin 2024/22**

(21) Application number: **23781447.0**

(22) Date of filing: **31.03.2023**

(51) International Patent Classification (IPC):
*H01M 4/525* (2010.01)    *H01M 4/131* (2010.01)
*H01M 4/1391* (2010.01)    *H01M 4/505* (2010.01)
*H01M 10/0562* (2010.01)    *H01M 4/02* (2006.01)

(52) Cooperative Patent Classification (CPC):
**H01M 4/02; H01M 4/131; H01M 4/1391;**
**H01M 4/505; H01M 4/525; H01M 10/0562;**
**Y02E 60/10**

(86) International application number:
**PCT/KR2023/004408**

(87) International publication number:
**WO 2023/191598 (05.10.2023 Gazette 2023/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.03.2022 KR 20220040830**

(71) Applicants:
• **LG ENERGY SOLUTION, LTD.**
**Seoul 07335 (KR)**
• **Korea Electronics Technology Institute**
**Bundang-gu, Seongnam-si**
**Gyeonggi-do**
**13509 (KR)**

(72) Inventors:
• **LEE, Dae-Jin**
**Daejeon 34122 (KR)**
• **HAH, Hoe-Jin**
**Daejeon 34122 (KR)**
• **KIM, Hyun-Seung**
**Seoul 06990 (KR)**
• **PARK, Keon-Ho**
**Seongnam-si, Gyeonggi-do 13584 (KR)**
• **YU, Ji-Sang**
**Seongnam-si, Gyeonggi-do 13600 (KR)**
• **CHO, Woo-Suk**
**Seongnam-si, Gyeonggi-do 13599 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **CATHODE FOR ALL-SOLID-STATE BATTERY, AND ALL-SOLID-STATE BATTERY COMPRISING SAME**

(57) A positive electrode for an all-solid-state battery according to the present disclosure may reduce in resistance at an interface between a solid electrolyte and an active material by residual lithium bonded to a surface of a positive electrode active material. Accordingly, the all-solid-state battery comprising the positive electrode active material has improved reversible capacity and reduced internal resistance(overvoltage) of the battery.

Additionally, it is possible to eliminate the need for a washing process to remove residual lithium when manufacturing the positive electrode active material and there is no need for any process for bonding residual lithium to the active material surface, thereby reducing the process cost required to manufacture the positive electrode active material.

FIG. 2a

EX. 1

1 μm

EP 4 376 127 A1

**Description**

TECHNICAL FIELD

The present disclosure relates to a positive electrode for an all-solid-state battery based on a nickel rich lithium transition metal composite oxide and a sulfide-based solid electrolyte. More particularly, the present disclosure relates to an all-solid-state battery with improved electrochemical properties by the reduced interfacial resistance at the interface between a positive electrode active material and a solid electrolyte.

The present application claims priority to Korean Patent Application No. 10-2022-0040830 filed on March 31, 2022 in the Republic of Korea, the disclosure of which is incorporated herein by reference.

BACKGROUND ART

Lithium ion secondary batteries are being widely used as a power of source for portable devices including IT mobile devices, and recently, the market is growing from small batteries to medium- and large scale batteries. In particular, the use of batteries in vehicle applications is sharply increasing. To use lithium ion secondary batteries as a power source of electric vehicles, high energy density and high output characteristics are required, and especially, it is important to ensure safety.

Lithium ion secondary batteries use nonaqueous organic electrolytes in liquid state and due to the fact, they have fire and explosion risks. Explosion accidents are continuously occurring in products using the same in the real world, so there is an urgent need to solve the problem.

All-solid-state batteries use solid electrolytes, instead of organic electrolytes, and they are batteries using solid components such as electrodes and electrolytes. The all-solid-state batteries may prevent fire and explosion risks due to higher safety of solid electrolytes than liquid electrolytes.

Solid electrolyte materials for all-solid-state batteries include gel-type polymer-based solid electrolytes, sulfide-based solid electrolytes and oxide-based solid electrolytes. Among them, the sulfide-based solid electrolytes exhibit high lithium ion conductivity of $10^{-3}$ S/cm or more, and it is easy to form a sheet and achieve a large scale area due to good interfacial contact attributed to low mechanical properties of sulfide particles(powder)and thus it is suitable for the manufacture of all-solid-state batteries having high energy density.

Meanwhile, all-solid-state batteries using the sulfide-based solid electrolytes fail to achieve high capacity due to high interfacial resistance at the interface between the positive electrode active material and the sulfide-based solid electrolyte. The main cause of the high interfacial resistance is regarded as 1) a space charge layer or a lithium deficient layer formed at the solid electrolyte interface due to a potential difference between the positive electrode active material and the solid electrolyte, and 2) an interfacial impurity layer formed by chemical reaction at the interface between the positive electrode active material and the solid electrolyte. To solve the problem, Patent Literature, Korean Patent Application No. 10-2018-0081309 introduces a lithium metal oxide ($LiMe_xO_y$) buffer layer at the interface between the positive electrode active material and the solid electrolyte to reduce the interfacial resistance, in order to improve the battery characteristics. However, the lithium metal oxide layer is effective when the positive electrode active material is lithium cobalt oxide, but in the case of a Ni-rich positive electrode active material, there is almost no difference in interfacial resistance effect between presence and absence of the buffer layer. Accordingly, there is a need for new technology to suppress the interfacial resistance of the Ni-rich positive electrode active material and the solid electrolyte.

[Patent Literature]

Korean Patent Application No. 10-2018-0081309

[Non-Patent Literature]

N. Ohta, K. Takada, I. Sakaguchi, L. Zhang, R. Ma, K. Fukuda, M. Osada & T. Sasaki, Electrochemistry Communication 9 (2007) 1486-1490
N. Ohta, K. Takada, L. Zhang, R. Ma, M. Osada & T. Sasaki, Advanced Material 18 (2006) 2226-2229

## DISCLOSURE

### Technical Problem

The present disclosure is directed to providing a positive electrode for an all-solid-state battery with reduced interfacial resistance at an interface between a solid electrolyte and a positive electrode active material. The present disclosure is further directed to providing an all-solid-state battery comprising the positive electrode. It will be readily appreciated that these and other objectives and advantages of the present disclosure may be realized by means or methods set forth in the appended claims and a combination thereof.

### Technical Solution

According to a first aspect of the present disclosure, there is provided a positive electrode for an all-solid-state battery, comprising a positive electrode active material and a solid electrolyte, wherein the positive electrode active material comprises a lithium transition metal composite oxide having a residual lithium content of more than 2,000 ppm, wherein the lithium transition metal composite oxide is a Ni-rich lithium transition metal composite oxide having a nickel (Ni) content of 70% or more among metals except lithium on an atomic fraction basis, and wherein the residual lithium comprises at least one of lithium hydroxide (LiOH), lithium carbonate ($Li_2CO_3$), lithium sulfate ($Li_2SO_4$) or lithium nitrate ($LiNO_3$).

According to a second aspect of the present disclosure, in the first aspect, the solid electrolyte comprises a sulfide-based solid electrolyte.

According to a third aspect of the present disclosure, in the first or second aspect, the Ni-rich lithium transition metal composite oxide is included in an amount of 80 wt% or more based on a total weight of the positive electrode active material.

According to a fourth aspect of the present disclosure, in any one of the first to third aspects, the lithium transition metal composite oxide comprises at least one of compounds represented by the following chemical formula 1:

$$[\text{Chemical formula 1}] \qquad Li_{1+a}(Ni_xCo_yMn_zM^1_w)_{1-a}O_{2-b}M^2_b$$

wherein $-0.1 \leq a \leq 0.3$, $x+y+z+w = 1$, wherein $0.7 \leq x < 1.0$, each of y and z is independently 0 or more and 0.3 or less, $0 \leq w \leq 0.1$, $0 \leq b \leq 0.05$, $M^1$ comprises at least one selected from the group consisting of Al, Mg, Ge, Mo, Nb, Si, Ti, Zr, Cr, W, V and Fe, and $M^2$ comprises at least one selected from the group consisting of boron (B), phosphorus (P) and fluorine (F).

According to a fifth aspect of the present disclosure, in any one of the first to fourth aspects, the lithium transition metal composite oxide comprises at least one from the group consisting of $LiNi_{0.7}Co_{0.15}Mn_{0.15}O_2$, $LiNi_{0.8}Co_{0.1}Mn_{0.1}O_2$, $LiNi_{0.88}Co_{0.1}Al_{0.02}O_2$, $LiNi_{0.84}Co_{0.15}Al_{0.01}O_2$ and $LiNi_{0.8}Co_{0.1}Mn_{0.1}O_2$.

According to a sixth aspect of the present disclosure, in any one of the first to fifth aspects, the sulfide-based solid electrolyte is included in an amount of 70 wt% or more based on a total weight of the solid electrolyte.

According to a seventh aspect of the present disclosure, in any one of the first to sixth aspects, the positive electrode active material comprises the Ni-rich lithium transition metal composite oxide having the residual lithium content of more than 2,000 ppm in an amount of 70 wt% or more based on 100 wt% of the positive electrode active material, and the solid electrolyte comprises a sulfide-based solid electrolyte in an amount of 70 wt% or more based on 100 wt% of the solid electrolyte.

According to an eighth aspect of the present disclosure, there is provided an all-solid-state battery, comprising the positive electrode according to any one of the first to seventh aspects, a negative electrode and a solid electrolyte membrane interposed between the positive electrode and the negative electrode.

According to a ninth aspect of the present disclosure, in the eighth aspect, the negative electrode comprises at least one selected from the group consisting of a lithium metal and a lithium alloy, and the lithium alloy comprises a lithium indium alloy.

According to a tenth aspect of the present disclosure, in the eighth or ninth aspect, the solid electrolyte membrane comprises a sulfide-based solid electrolyte.

### Advantageous Effects

The positive electrode for the all-solid-state battery according to the present disclosure may reduce in resistance at the interface between the solid electrolyte and the active material by residual lithium bonded to the surface of the positive electrode active material. Accordingly, the all-solid-state battery comprising the positive electrode active material may have improved reversible capacity and reduced internal resistance(overvoltage) of the battery.

Additionally, it may be possible to eliminate the need for a washing process to remove residual lithium when manufacturing the positive electrode active material and there is no need for any process for bonding residual lithium to the active material surface, thereby reducing the process cost required to manufacture the positive electrode active material.

DESCRIPTION OF DRAWINGS

The accompanying drawings illustrate exemplary embodiments of the present disclosure and together with the foregoing disclosure, serve to provide a further understanding of the technical aspect of the present disclosure, and thus, the present disclosure should not be construed as being limited to the drawings.

FIG. 1 is an exploded diagram showing each element of an all-solid-state battery according to an embodiment of the present disclosure.

FIGS. 2a and 2b are scanning electron microscopy (SEM) images of positive electrode active materials prepared in example 1 and comparative example, respectively.

FIG. 3a shows a curve of initial charge/discharge at 0.05C in all-solid-state batteries using positive electrode active materials manufactured in comparative example and example 1, and FIG. 3b shows a curve of initial charge/discharge at 0.05C in all-solid-state batteries using positive electrode active materials of examples 1 and 3.

FIGS. 4a and 4b show impedance resistance of all-solid-state batteries of comparative example and example 1 in initially charged condition, respectively.

FIG. 5 shows discharge capacity as a function of rate characteristics (C-rate) in all-solid-state batteries using positive electrode active materials manufactured in comparative example and example 1.

FIG. 6 shows X-ray photoelectron spectroscopy (XPS) measurement and analysis results of positive electrodes of all-solid-state batteries using positive electrode active materials of comparative example and example 1 after disassembling the initially charged/discharged batteries and taking out the electrodes.

FIG. 7 shows a curve of initial charge/discharge at 0.05C in all-solid-state batteries using positive electrode active materials manufactured in comparative example and example 2.

FIG. 8 shows impedance resistance of an all-solid-state battery in initially charged condition.

BEST MODE

Hereinafter, the present disclosure will be described in detail. However, the present disclosure is not limited to the following description, and may have various modifications to each element or selective combination of the elements as necessary. Accordingly, it should be understood that the present disclosure covers all modifications, equivalents or substitutes included in the technical aspect and scope of the present disclosure.

The term "comprise" or "include" when used in the specification, specifies the presence of stated elements, but does not preclude the presence or addition of one or more other elements, unless the context clearly indicates otherwise.

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

It should be further understood that "A and/or B" when used in the specification refers to either A or B or both.

When used herein, "particle size $(D_{50})$" refers to a particle size at 50% of cumulative particle size distribution of particles, and the particle size may be measured using a laser diffraction method. Specifically, a particle size distribution is calculated by dispersing powder in a dispersion medium, introducing into commercially available laser diffraction particle size measurement machine (for example, Microtrac S3500), and measuring a diffraction pattern difference according to the particle size when particles pass through a laser beam. The particle size $D_{50}$ may be measured by calculating a particle diameter at 50% of cumulative particle size distribution of particles in the measurement machine.

A first aspect of the present disclosure relates to a positive electrode for an all-solid-state battery comprising a lithium transition metal composite oxide as a positive electrode active material.

In the present disclosure, the positive electrode comprises a positive electrode active material and a solid electrolyte. In an embodiment of the present disclosure, the positive electrode may comprise a current collector and a positive electrode active material layer on one or two surfaces of the current collector. The positive electrode active material layer may have a layered structure into which a mixture comprising the positive electrode active material and the solid electrolyte is formed. In an embodiment of the present disclosure, the positive electrode active material may be included in an amount of 60 wt% or more based on 100 wt% of the positive electrode active material layer. Meanwhile, the solid electrolyte may be included in an amount of 40 wt% or more based on 100 wt% of the positive electrode active material layer. In a specific embodiment of the present disclosure, the positive electrode active material and the solid electrolyte may be included at a weight ratio of 60:40 to 99.99:0.01.

In the present disclosure, the positive electrode active material comprises a lithium transition metal composite oxide, and the lithium transition metal composite oxide comprises a Ni-rich lithium transition metal composite oxide having the nickel (Ni) content of 70 mol% or more among metals except lithium on the atomic fraction basis. In addition to the nickel, the Ni-rich lithium transition metal composite oxide may comprise at least one selected from Mn, Co, Al and Mg. Additionally, the Ni-rich lithium transition metal composite oxide may comprise a residual lithium content of more than 2,000 ppm.

In an embodiment of the present disclosure, the positive electrode active material may comprise the Ni-rich lithium transition metal composite oxide having the residual lithium content of more than 2,000 ppm in an amount of 50 wt% or more, 70 wt% or more or 80 wt% or more based on 100 wt% of the positive electrode active material. For example, the positive electrode active material may consist of the Ni-rich lithium transition metal composite oxide having the residual lithium content of more than 2,000 ppm.

In an embodiment of the present disclosure, the positive electrode active material may comprise the Ni-rich lithium transition metal composite oxide in an amount of 80 wt% or more based on the total weight of the positive electrode active material.

In an embodiment of the present disclosure, the Ni-rich lithium transition metal composite oxide may comprise at least one of compounds represented by the following chemical formula 1.

$$[\text{Chemical formula 1}] \qquad \text{Li}_{1+a}(\text{Ni}_x\text{Co}_y\text{Mn}_z\text{M}^1_w)_{1-a}\text{O}_{2-b}\text{M}^2_b$$

In the above chemical formula 1, $-0.1 \leq a \leq 0.3$, $x+y+z+w=1$ wherein $0.7 \leq x < 1.0$, each of y and z is independently 0 or more and 0.3 or less, $0 \leq w \leq 0.1$, $0 \leq b \leq 0.05$, $\text{M}^1$ comprises at least one selected from the group consisting of Al, Mg, Ge, Mo, Nb, Si, Ti, Zr, Cr, W, V and Fe, and $\text{M}^2$ comprises at least one selected from the group consisting of phosphorus (P), fluorine (F) and boron (B). The $\text{M}^1$ may preferably comprise Al. Meanwhile, in a specific embodiment of the present disclosure, the compound represented by the above chemical formula 1 may comprise at least one selected from compounds in which a and b are zero (0).

In the present disclosure, the Ni-rich lithium transition metal composite oxide has the nickel content (atomic fraction) of 70mol% or more based on the total amount of metals except lithium. When the atomic fraction of nickel in the lithium transition metal composite oxide of the present disclosure satisfies the above-described range, it may be possible to achieve higher capacity and higher energy density of the battery without degrading the capacity characteristics of the lithium composite metal oxide.

In an embodiment of the present disclosure, the Ni-rich lithium transition metal composite oxide may comprise, for example, at least one selected from the group consisting of $\text{LiNi}_{0.7}\text{Co}_{0.15}\text{Mn}_{0.15}\text{O}_2$, $\text{LiNi}_{0.8}\text{Co}_{0.1}\text{Mn}_{0.1}\text{O}_2$, $\text{LiNi}_{0.88}\text{Co}_{0.1}\text{Al}_{0.02}\text{O}_2$ and $\text{LiNi}_{0.84}\text{Co}_{0.15}\text{Al}_{0.01}\text{O}_2$.

In the present disclosure, the Ni-rich lithium transition metal composite oxide has the residual lithium content of more than 2,000 ppm. In an embodiment of the present disclosure, the Ni-rich lithium transition metal composite oxide may have the residual lithium content of 5,000 ppm or more.

In general, the positive electrode active material layer is formed by dispersing the electrode material such as the positive electrode active material in a solvent to prepare a positive electrode slurry and coating the slurry on the current collector. The residual lithium makes the positive electrode slurry into a gel in the positive electrode manufacturing process, which makes it difficult to manufacture the electrode. Additionally, in batteries using a nonaqueous electrolyte solution as an electrolyte, the residual lithium produces gas by side reaction with the electrolyte solution, or is a factor that degrades the electrochemical performance of the batteries. To address this issue, a washing process is used to remove the residual lithium when manufacturing the Ni-rich lithium transition metal composite oxide.

However, the inventors found that in all-solid-state batteries using solid electrolytes, especially, sulfide-based solid electrolytes as an electrolyte material, the residual lithium present on the surface of the positive electrode active material plays a role in suppressing the resistance at the interface between the positive electrode active material and the solid electrolyte.

Accordingly, the inventors proposed a positive electrode for an all-solid-state battery comprising a positive electrode active material comprising a predetermined range or more of residual lithium and a sulfide-based solid electrolyte.

The residual lithium may comprise at least one of lithium hydroxide (LiOH), lithium carbonate ($\text{Li}_2\text{CO}_3$), lithium sulfate ($\text{Li}_2\text{SO}_4$) or lithium nitrate ($\text{LiNO}_3$), and for example, the residual lithium may comprise at least one selected from lithium hydroxide (LiOH) and lithium carbonate ($\text{Li}_2\text{CO}_3$).

In general, Ni-rich lithium transition metal composite oxide may be obtained by mixing a lithium source with a metal hydroxide of each metal which is the constituent material, and sintering the resulting mixture at high temperature. In this instance, the lithium source may comprise at least one type of lithium compound of lithium hydroxide (LiOH),

lithium carbonate ($Li_2CO_3$), lithium sulfate ($Li_2SO_4$) or lithium nitrate ($LiNO_3$). To form Ni oxidation number and compensate for lithium volatilization in the high-temperature sintering process when manufacturing the Ni-rich lithium transition metal composite oxide, the lithium compound is fed in excess, and as a result, the Ni-rich lithium transition metal composite oxide comprises residual lithium that is a by-product from the lithium compound. As described above, the residual lithium may be a reaction by-product and/or an unreacted product from the compound fed as the lithium source when manufacturing the Ni-rich lithium transition metal composite oxide. According to another embodiment of the present disclosure, the residual lithium may be additionally produced by leaving the product resulting from the manufacture of the Ni-rich lithium transition metal composite oxide undisturbed in ambient atmosphere at room temperature for a predetermined time. For example, when exposed to air, the Ni-rich lithium transition metal composite oxide according to the present disclosure may react with carbon dioxide ($CO_2$) in the air to produce $Li_2CO_3$. In an embodiment of the present disclosure, to increase the residual lithium content, the manufactured positive electrode active material may be placed in air. For example, the positive electrode active material may be placed in air of room temperature of about 25°C for 1 day to 2 months, or 1 day to 5 weeks. Those skilled in the art may properly adjust the temperature and time when the positive electrode active material is placed in air, and the temperature and time are not limit to specific ranges in the present disclosure.

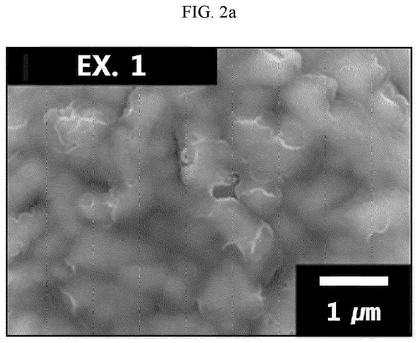

Meanwhile, in the present disclosure, the residual lithium may be bonded to the surface of the Ni-rich lithium transition metal composite oxide particles in part or in whole. According to an embodiment of the present disclosure, the residual lithium may be introduced in a form of a coating layer that covers the surface of the Ni-rich lithium transition metal composite oxide particles in part or in whole. Referring to FIG. 2a, it was confirmed that the coating layer was formed on the surface of the Ni-rich lithium transition metal composite oxide particles by the residual lithium. Meanwhile, in an embodiment of the present disclosure, the positive electrode active material particles of Ni-rich lithium transition metal composite oxide may be in a form of primary particles, and along with this or independently of this, may comprise secondary particles formed by agglomeration of multiple primary particles. When the positive electrode active material particles are in a form of secondary particles, the residual lithium may be bonded to the surface of the primary particles, and as a result, some of the residual lithium may be present in the secondary particles, and the surface of the secondary particles may be also coated with the residual lithium in part or in whole. The bonding may be at least one of chemical bonding or physical bonding. For example, the residual lithium may be bonded to the surface of the Ni-rich lithium transition metal composite oxide particles by ionic bonding and/or van der waals bonding and/or hydrogen bonding.

In an embodiment of the present disclosure, the residual lithium content (ppm) may be, for example, measured by oxidation-reduction titration using potentiometry. For example, the method may be performed by preparing a solution containing a predetermined amount of positive electrode active material dispersed in water, measuring a pH and a voltage change using a titrant solution, for example, an aqueous solution of HCl, and determining an end point at which a voltage change value ($dE/dV$ [mV/mL]) as a function of a volume change of the titrant solution is at the maximum.

Meanwhile, in a specific embodiment of the present disclosure, in the Ni-rich lithium transition metal composite oxide, the pH of the water dispersion is preferably 10 or more. For example, the pH may be measured using 0.1N HCl titrant solution added to the water dispersion.

In an embodiment of the present disclosure, a particle size ($D_{50}$) of the Ni-rich lithium transition metal composite oxide particles may be 0.3 μm to 10 μm. However, the particle size is not limited thereto.

Meanwhile, in an embodiment of the present disclosure, in addition to the Ni-rich lithium transition metal composite oxide, the positive electrode active material may further comprise another positive electrode active material, if necessary. The additional positive electrode active material is not limited to a particular type and may include any material that is used as positive electrode materials in the field of secondary batteries. Its non-limiting examples may include at least one selected from lithium manganese oxide such as $Li_{1+x}Mn_{2-x}O_4$ (where x is 0 to 0.33), $LiMnO_3$, $LiMn_2O_3$; lithium copper oxide ($Li_2CuO_2$); vanadium oxide such as $LiVsOs$, $LiV_3O_4$, $V_2O_5$, $Cu_2V_2O_7$; lithium nickel composite oxide such as $LiNi_xM_{1-x}O_2$ (where M is at least one selected from Co, Mn, Fe, Cr, Zn, Al, Mg and Ta, and x is less than 0.7); lithium manganese composite oxide represented by $LiMn_{2-x}M_xO_2$ (where M = Co, Ni, Fe, Cr, Zn or Ta, x = 0.01 to 0.1) or $Li_2Mn_3MO_8$ (where M = Fe, Co, Ni, Cu or Zn); lithium manganese composite oxide of spinel structure represented by $LiNi_xMn_{2-x}O_4$ (x is less than 0.7); $LiMn_2O_4$ with partial substitution of alkaline earth metal ions for Li in formula; disulfide compounds; $Fe_2(MoO_4)_3$.

In the present disclosure, the solid electrolyte may comprise a polymer-based solid electrolyte and/or an inorganic solid electrolyte, preferably an inorganic solid electrolyte, and more particularly a sulfide-based solid electrolyte. In an embodiment of the present disclosure, the positive electrode may comprise a sulfide-based solid electrolyte as the solid electrolyte, and the sulfide-based solid electrolyte may be included in an amount of 70wt% or more, or 80wt% or more based on the total weight of the solid electrolyte.

The sulfide-based solid electrolyte exhibits high lithium ion conductivity of $10^{-3}$ S/cm or more, and it is easy to form a sheet and achieve a large scale area due to good interfacial contact attributed to low mechanical properties of sulfide particles (powder), and thus it is suitable for the manufacture of all-solid-state batteries having high energy density. As described above, it was impossible to achieve high capacity due to high interfacial resistance at the interface between the sulfide-based solid electrolyte and the positive electrode active material, but the interfacial resistance characteristics may be improved by combining the sulfide-based solid electrolyte with the positive electrode active material having high residual lithium content.

The sulfide-based solid electrolyte contains sulfur as an electrolyte material and is not limited to a particular material, and may comprise at least one of crystalline solid electrolyte, non-crystalline solid electrolyte (glass-like solid electrolyte) or glass ceramic solid electrolyte. Specific examples of the sulfide-based solid electrolyte may include LPS sulfide comprising sulfur and phosphorus, $Li_xPS_yMe_z$ (Me is Cl, Br or I, and each of x, y and z is greater than 0), $Li_{4-x}Ge_{1-x}P_xS_4$(x is 0.1 to 2, specifically, 3/4, 2/3), $Li_{10\pm1}MP_2X_{12}$(M=Ge, Si, Sn, Al, X=S, Se), $Li_{3.833}Sn_{0.833}As_{0.166}S_4$, $Li_4SnS_4$, $Li_{3.25}Ge_{0.25}P_{0.75}S_4$, $Li_2S-P_2S_5$, $B_2S_3-Li_2S$, $xLi_2S-(100-x)P_2S_5$ (x is 70 to 80), $Li_2S-SiS_2-Li_3N$, $Li_2S-P_2S_5-LiI$, $Li_2S-SiS_2-LiI$, $Li_2S-B_2S_3-LiI$, $Li_{7-x}PS_{6-x}Cl_x$($0\leq x\leq 2$) and $Li_{3.25}Ge_{0.25}P_{0.75}S_4$. Specifically, the sulfide-based solid electrolyte may comprise an argyrodite type comprising at least one selected from $Li_6PS_5Cl$, $Li_6PS_5Br$ and $Li_6PS_5I$. However, the sulfide-based solid electrolyte is not limited thereto.

Meanwhile, the solid electrolyte may further comprise an oxide-based solid electrolyte and/or a polymer-based solid electrolyte, if necessary. The oxide-based solid electrolyte may comprise at least one of a LLTO-based compound (($(La,Li)TiO_3$), $Li_6La_2CaTa_2O_{12}$, $Li_6La_2ANb_2O_{12}$(A=Ca, Sr), $Li_2Nd_3TeSbO_{12}$, $Li_3BO_{2.5}N_{0.5}$, $Li_9SiAlO_8$, a LAGP-based compound ($Li_{1+x}Al_xGe_{2-x}(PO_4)_3$ where $0\leq x\leq 1$, $0\leq y\leq 1$), a LATP-based compound ($Li_{1+x}Al_xTi_{2-x}(PO_4)_3$ where $0\leq x\leq 1$, $0\leq y\leq 1$) such as $Li_2O-Al_2O_3-TiO_2-P_2O_5$, $Li_{1+x}Ti_{2-x}Al_xSi_y(PO_4)_{3-y}$ (where $0\leq x\leq 1$, $0\leq y\leq 1$), $LiAl_xZr_{2-x}(PO_4)_3$ (where $0\leq x\leq 1$, $0\leq y\leq 1$), $LiTi_xZr_{2-x}(PO_4)_3$ (where $0\leq x\leq 1$, $0\leq y\leq 1$), $Li_3N$, LISICON, a LIPON-based compound ($Li_{3+y}PO_{4-x}N_x$, where $0\leq x\leq 1$, $0\leq y\leq 1$), a perovskite-based compound (($(La, Li)TiO_3$), a NASICON-based compound such as $LiTi_2(PO_4)_3$, or a LLZO-based compound comprising lithium, lanthanum, zirconium and oxygen as constituent materials.

The polymer-based solid electrolyte comprises a polymer resin and a lithium salt, and may be a solid polymer electrolyte which is a mixture of a solvated lithium salt and a polymer resin, or a polymer gel electrolyte in which an organic electrolyte solution containing an organic solvent and a lithium salt is impregnated into a polymer resin.

Meanwhile, the positive electrode may further comprise a conductive material. The conductive material may include, without limitation, any material having conductive properties without causing any chemical change to the corresponding battery, and for example, may comprise at least one selected from graphite such as natural graphite or artificial graphite; carbon black, acetylene black, ketjen black, channel black, furnace black, lamp black, thermal black; carbon fibers such as Vapor grown carbon fibers (VGCF) or conductive fibers such as metal fibers; fluorocarbon; metal powder such as aluminum, nickel powder; conductive whiskers such as zinc oxide, potassium titanate; conductive metal oxide such as titanium oxide; and conductive materials such as polyphenylene derivatives.

Meanwhile, a second aspect of the present disclosure relates to an all-solid-state battery comprising the positive electrode according to the present disclosure having the above-described features. The all-solid-state battery comprises a positive electrode, a negative electrode and a solid electrolyte membrane interposed between the positive electrode and the negative electrode.

The negative electrode may comprise a negative electrode active material and a solid electrolyte, and may further comprise a conductive material, if necessary. The negative electrode comprises a negative electrode active material layer comprising the above-described electrode materials. The negative electrode may comprise a current collector, and a negative electrode active material layer stacked on one or two surfaces of the current collector.

The negative electrode active material may include any material that is used as negative electrode active materials of lithium ion secondary batteries. For example, the negative electrode active material may include at least one selected from carbon such as non-graphitizing carbon, graphite-based carbon; metal composite oxide such as $Li_xFe_2O_3$ ($0\leq x\leq 1$), $Li_xWO_2$ ($0\leq x\leq 1$), $Sn_xMe_{1-x}Me'_yO_z$(Me: Mn, Fe, Pb, Ge; Me': Al, B, P, Si, Group 1, 2 and 3 elements in the periodic table, halogen; $0<x\leq 1$; $1\leq y\leq 3$; $1\leq z\leq 8$); lithium metal; lithium alloys; lithium-indium alloys; silicon-based alloys; tin-based alloys; indium; indium based alloys; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; conductive polymer such as polyacetylene; Li-Co-Ni based materials; titanium oxide; and lithium titanium oxide.

For more details about the conductive material and the solid electrolyte in the negative electrode, reference may be made to the positive electrode.

The solid electrolyte layer may comprise an ion conductive material, and the ion conductive material may comprise a polymer-based solid electrolyte and/or an inorganic solid electrolyte, and may include, without limitation, any ion conductive material that is used as solid electrolytes for all-solid-state batteries. In the present disclosure, for more details about the ion conductive material included in the solid electrolyte layer, reference may be made to the polymer-based solid electrolyte and the inorganic solid electrolyte.

Additionally, the present disclosure provides a battery module comprising the secondary battery as a unit battery, a battery pack comprising the battery module, and a device comprising the battery pack as a power source.

In this instance, specific examples of the device may comprise power tools; electric cars including electric Vehicles (EV), Hybrid Electric Vehicles (HEV), Plug-in Hybrid Electric Vehicles (PHEV); electric two-wheeled vehicles including E-bikes and E-scooters; electric golf carts; and power storage systems that work using power produced by electric motors, but is not limited thereto.

Hereinafter, the present disclosure will be described in more detail through examples, but the following examples are provided to describe the present disclosure by way of illustration and the scope of the present disclosure is not limited thereto.

[Example]

Example 1)

A nickel salt, a cobalt salt and a manganese salt were mixed at a ratio of 70: 10:20, and nickel-cobalt-manganese composite hydroxide was produced by coprecipitation with an addition of complexing agent. LiOH as a lithium compound was added and mixed, and thermally treated at about 850°C to obtain a Ni-rich lithium transition metal composite oxide ($LiNi_{0.7}Co_{0.1}Mn_{0.2}O_2$). It was confirmed that the residual lithium content of the obtained Ni-rich lithium transition metal composite oxide was about 5000 ppm, and the residual lithium was LiOH and $Li_2CO_3$.

Comparative example) A positive electrode active material was manufactured by washing the composite oxide obtained in example 1 to reduce the amount of residual lithium comprising LiOH and $Li_2CO_3$ on the surface down to 2,000 ppm.

Example 2)

The positive electrode active material of comparative example was placed in air of room temperature (about 25°C)for 7 days to induce the production of residual lithium comprising LiOH and $Li_2CO_3$ to manufacture a positive electrode active material comprising4,500 ppm of lithium compound on the surface.

Example 3)

The composite oxide obtained in example 1 was placed in air of room temperature (about 25°C) for 5 weeks to induce the production of residual lithium comprising LiOH and $Li_2CO_3$ to manufacture a positive electrode active material comprising 13,200 ppm of lithium compound on the surface.

(Measurement of residual lithium)

The concentration (ppm) of residual lithium was determined by oxidation-reduction titration using potentiometry. 0.1g of the positive electrode active material obtained in each of example and comparative example was added to distilled water and stirred for 10 minutes to make a solution sample. Subsequently, titration was performed by adding 0.1 N HCl solution in small amounts to the solution sample and measuring the pH and voltage change to measure the residual lithium content on the surface. The titration was finished when two end points appeared in an area in which a voltage change value(dE/dV [mV/mL]) as a function of a volume change of HCl was at the maximum. Subsequently, the concentration in titration was determined by applying the following equation and the following [Table 1] summaries the results. In the following equation, $EP_1$ denotes the first end point, and $EP_2$ denotes the second end point. Additionally, the pH of the solution sample obtained by the stirring was measured.

[Equation]

$$Li_2CO_3(wt\%) = \frac{0.1 \times (EP_2 - EP_1)}{1000} \times \frac{73.8882}{\text{sample weight(g)}} \times 100$$

$$LiOH(wt\%) = \frac{0.1 \times (2EP_1 - EP_2)}{1000} \times \frac{23.9410}{\text{sample weight(g)}} \times 100$$

[Table 1]

|  | Total residual lithium content (ppm) (comprising LiOH and $Li_2CO_3$) | pH |
|---|---|---|
| Comparative example | 2,000 | 10.0 |
| Example 1 | 5,000 | 11.0 |
| Example 2 | 4,500 | 10.8 |
| Example 3 | 13,200 | 12.0 |

[Manufacture of all-solid-state battery and evaluation of electrochemical characteristics]

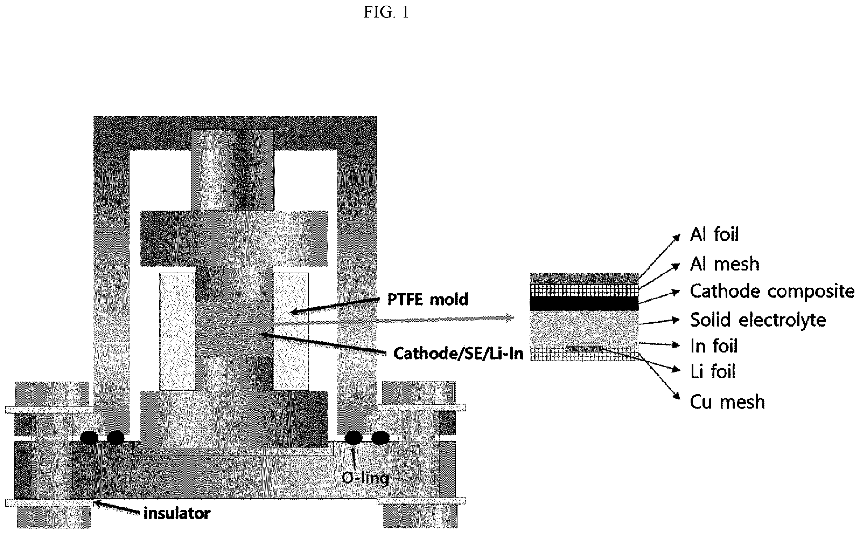

The positive electrode active materials of comparative example and example were used to manufacture all-solid-state batteries, and LiePSsCl as a solid electrolyte, Li-In as a negative electrode and Super C as a conductive material were used. An all-solid-state battery was manufactured using a 10 mm mold type pressure cell. First, 100 mg of the solid electrolyte was compressed under the pressure of 250 MPa to form a solid electrolyte layer. For a positive electrode, a positive electrode composite comprising the positive electrode active material/the solid electrolyte/the super C mixed at a weight ratio of 70:30:3 was used, and for a current collector, an Al mesh and a foil were used. For the counter electrode, a Cu mesh and a Cu foil were stacked together with a lithium-indium alloy. The electrodes were all placed, and finally, the pressure of 440 MPa was applied to assemble a cell. The structure and electrode configuration of the electrochemical cell used in the study is the same as FIG. 1.

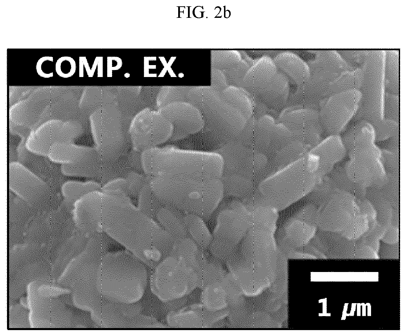

FIGS. 2a and 2b are scanning electron microscopy (SEM) images of the positive electrode active materials prepared in example 1 and comparative example, respectively. A surface by-product from residual lithium was observed on the surface of the positive electrode active material of example 1. In contrast, the surface of comparative example having undergone washing to remove residual lithium was found clean.

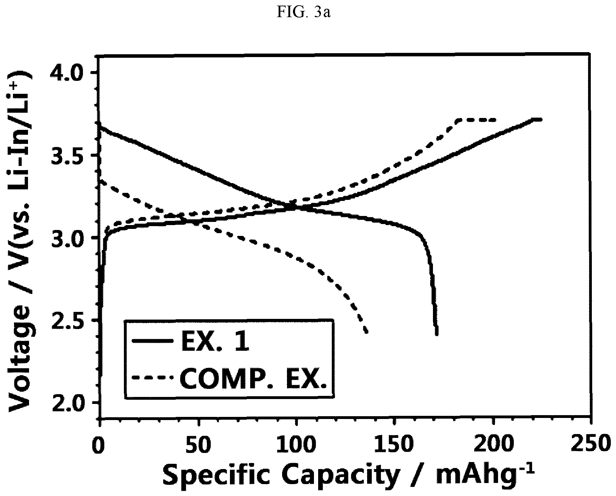

FIG. 3a shows a curve of initial charge/discharge at 0.05C in the all-solid-state batteries using the positive electrode active material manufactured in comparative example and example 1. It was confirmed that example 1 exhibited higher charge/discharge capacity than comparative example. It can be seen that the battery comprising the positive electrode of example 1 has a reduction in overvoltage during charging/discharging, and it may be understood that it is due to the resistance reduction of the positive electrode.

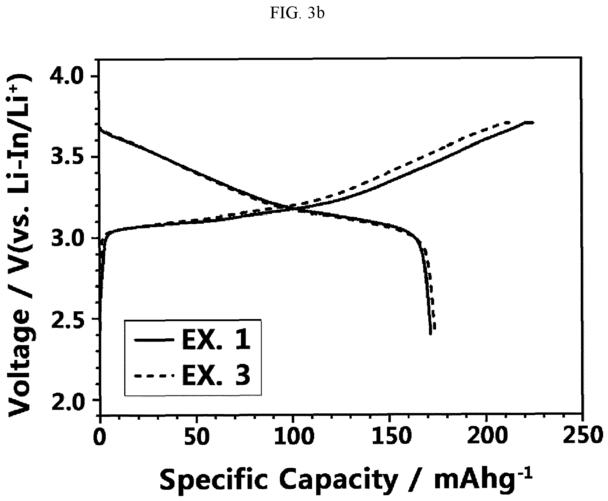

FIG. 3b shows the comparison of charge/discharge characteristics as a function of residual lithium content, and shows a curve of initial charge/discharge at 0.05C in the all-solid-state batteries using the positive electrode active materials of examples 1 and 3 having different residual lithium content. It can be seen that examples 1 and 3 show similar charge/discharge capacity. Accordingly, it was confirmed that when the residual lithium content was more than 2, 000 ppm, it was effective in reducing the resistance of the positive electrode.

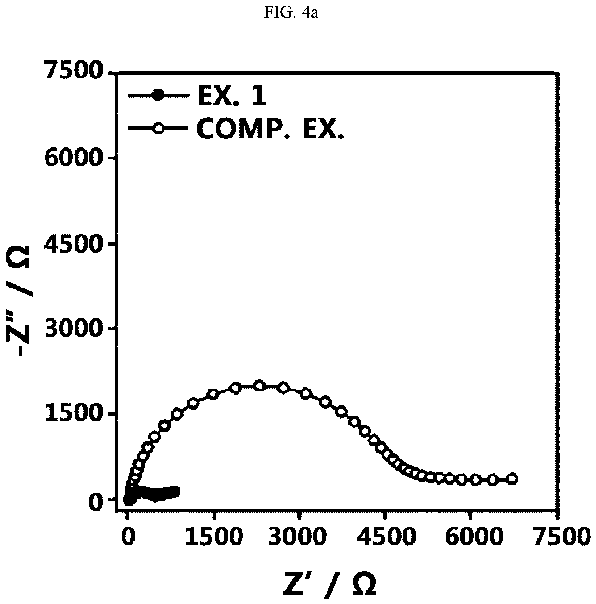

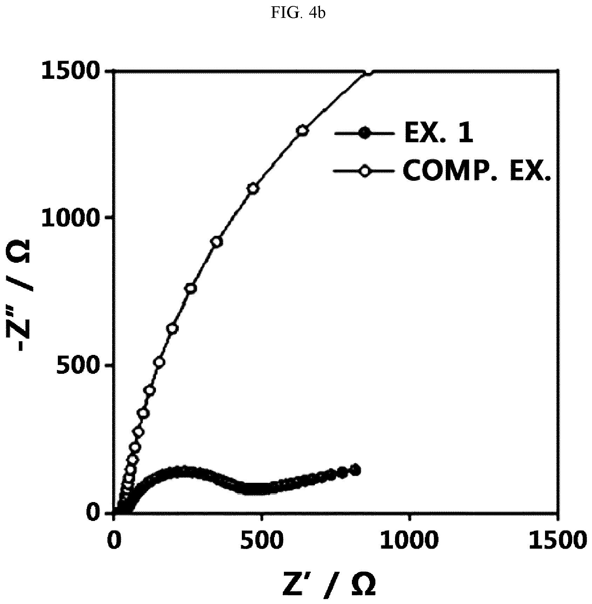

FIGS. 4a and 4b show the impedance resistance of the all-solid-state batteries of comparative example and example 1 in initially charged condition, respectively. To determine the actual resistance of the battery, the resistance of the battery was measured using the AC-impedance method. The impedance in state of charge was measured, and it was confirmed that the total impedance resistance of comparative example was 5,000 ohm, and the resistance of example 1 was 480 ohm that was significantly lower. Accordingly, it was confirmed that the positive electrode active material containing a considerable amount of residual lithium on the surface was effective in reducing the interfacial resistance, thereby improving the charge/discharge capacity.

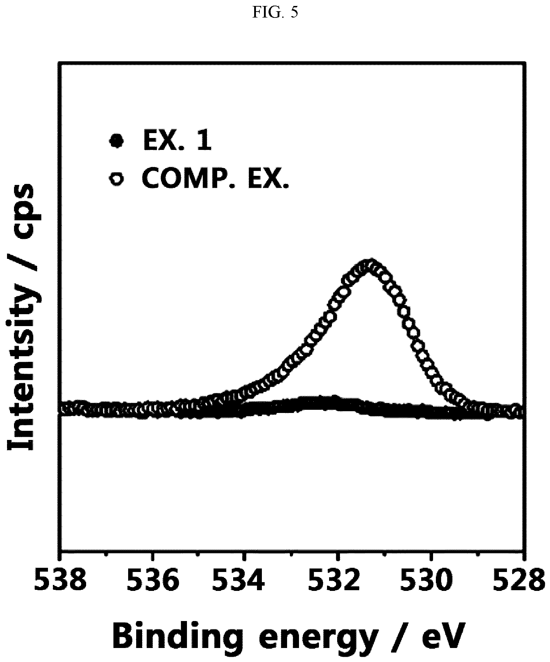

FIG. 5 shows the discharge capacity as a function of rate characteristics (C-rate) of the all-solid-state batteries using the positive electrode active materials manufactured in comparative example and example 1. It was confirmed that example 1 showed much higher discharge capacity over the entire C-rate range than comparative example. As can be seen from the above impedance results, the interfacial resistance significantly reduces, resulting in improved rate characteristics.

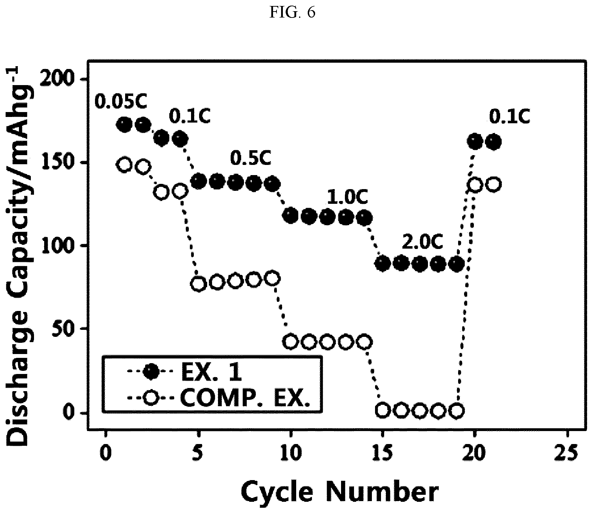

FIG. 6 shows X-ray photoelectron spectroscopy (XPS) measurement and analysis results of the positive electrodes of the all-solid-state batteries using the positive electrode active materials of comparative example and example 1 after disassembling the initially charged/discharged batteries and taking out the electrodes. In the case of comparative example, high peak intensity attributed to P-O bond was found at 531eV and this results from the formation of phosphorus oxide by side reaction of the positive electrode active material and the solid electrolyte. In contrast, in the case of example 1,almost no peak was found in the corresponding area, and this represents that the residual lithium on the positive electrode surface is effective in suppressing side reaction of the positive electrode active material and the solid electrolyte. Accordingly, it was confirmed that the residual lithium on the surface of the positive electrode active material as proposed was very effective in suppress side reaction of the positive electrode active material and the solid electrolyte and reducing the interfacial resistance.

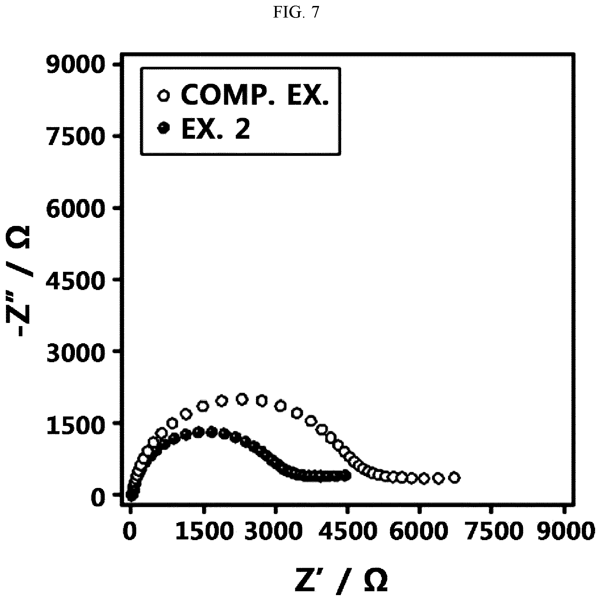

To verify the effect of the present disclosure, comparative evaluation was performed between comparative example and example 2. FIG. 7 shows a curve of initial charge/discharge at 0.05C in the all-solid-state batteries using the positive electrode active materials manufactured in comparative example and example 2. It was confirmed that the charge/discharge capacity of example 2 was recovered to some extent by suppressing overvoltage compared to comparative example. It is obvious that the positive electrode active material surface beneficial to reduce the interfacial resistance was formed by the reproduction of residual lithium on the surface of the positive electrode active material of example 2.

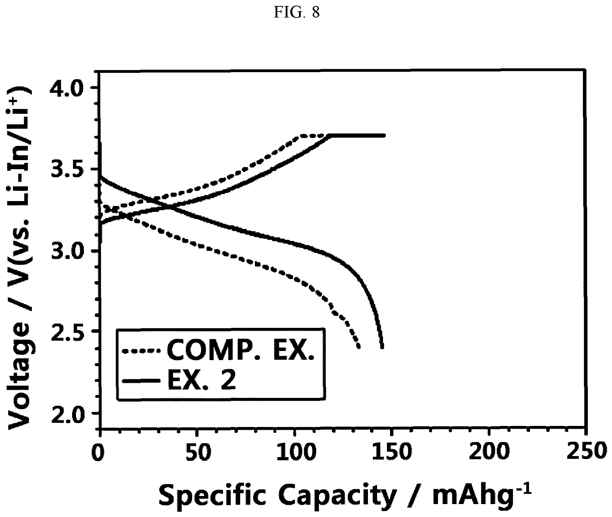

FIG. 8 shows the impedance resistance of the all-solid-state battery in initially charged condition. To determine the actual resistance of the battery, the resistance of the battery was measured using the AC-impedance method. The impedance in state of charge was measured, and the total impedance resistance of comparative example was 5000 ohm while the resistance of example 2 was 3200 ohm that was lower than comparative example. Accordingly, it was confirmed that the residual lithium re-produced on the surface was effective in suppressing the interfacial resistance of the positive electrode active material, thereby improving the charge/discharge capacity. Accordingly, it was confirmed that the capacity recovery of example 2 was the resulting effect and the residual lithium contributed to the improved performance of the positive electrode active material in the all-solid-state battery.

While the present disclosure has been hereinabove described with reference to the embodiments and the accompanying drawings, it is obvious to those skilled in the art that a variety of changes and modifications may be made to the present disclosure in the scope of the present disclosure based on the foregoing description.

**Claims**

1. A positive electrode for an all-solid-state battery, comprising:

   a positive electrode active material and a solid electrolyte,
   wherein the positive electrode active material comprises a lithium transition metal composite oxide having a residual lithium content of more than 2,000 ppm,
   wherein the lithium transition metal composite oxide is a Ni-rich lithium transition metal composite oxide having a nickel (Ni) content of 70% or more among metals except lithium on an atomic fraction basis, and
   wherein the residual lithium comprises at least one of lithium hydroxide (LiOH), lithium carbonate ($Li_2CO_3$), lithium sulfate ($Li_2SO_4$) or lithium nitrate ($LiNO_3$).

2. The positive electrode for the all-solid-state battery according to claim 1, wherein the solid electrolyte comprises a sulfide-based solid electrolyte.

3. The positive electrode for the all-solid-state battery according to claim 1, wherein the Ni-rich lithium transition metal composite oxide is included in an amount of 80 wt% or more based on a total weight of the positive electrode active material.

4. The positive electrode for the all-solid-state battery according to claim 1, wherein the lithium transition metal composite oxide comprises at least one of compounds represented by the following chemical formula 1:

   [Chemical formula 1] $\quad Li_{1+a}(Ni_xCo_yMn_zM^1_w)_{1-a}O_{2-b}M^2_b$

   wherein $-0.1 \leq a \leq 0.3$, $x+y+z+w = 1$, wherein $0.7 \leq x < 1.0$, each of y and z is independently 0 or more and 0.3 or less, $0 \leq w \leq 0.1$, $0 \leq b \leq 0.05$, $M^1$ comprises at least one selected from the group consisting of Al, Mg, Ge, Mo, Nb, Si, Ti, Zr, Cr, W, V and Fe, and $M^2$ comprises at least one selected from the group consisting of boron (B), phosphorus (P) and fluorine (F).

5. The positive electrode for the all-solid-state battery according to claim 1, wherein the lithium transition metal composite oxide comprises at least one from the group consisting of $LiNi_{0.7}Co_{0.15}Mn_{0.15}O_2$, $LiNi_{0.8}Co_{0.1}Mn_{0.1}O_2$, $LiNi_{0.88}Co_{0.1}Al_{0.02}O_2$, $LiNi_{0.84}Co_{0.15}Al_{0.01}O_2$ and $LiNi_{0.8}Co_{0.1}Mn_{0.1}O_2$.

6. The positive electrode for the all-solid-state battery according to claim 2, wherein the sulfide-based solid electrolyte is included in an amount of 70 wt% or more based on a total weight of the solid electrolyte.

7. The positive electrode for the all-solid-state battery according to claim 1, wherein the positive electrode active material comprises the Ni-rich lithium transition metal composite oxide having the residual lithium content of more than 2,000 ppm in an amount of 70 wt% or more based on 100 wt% of the positive electrode active material, and the solid electrolyte comprises a sulfide-based solid electrolyte in an amount of 70 wt% or more based on 100 wt% of the solid electrolyte.

8. An all-solid-state battery, comprising:
the positive electrode according to any one of claims 1 to 7, a negative electrode and a solid electrolyte membrane interposed between the positive electrode and the negative electrode.

9. The all-solid-state battery according to claim 8, wherein the negative electrode comprises at least one selected from the group consisting of a lithium metal and a lithium alloy, and the lithium alloy comprises a lithium indium alloy.

10. The all-solid-state battery according to claim 9, wherein the solid electrolyte membrane comprises a sulfide-based solid electrolyte.

FIG. 1

PTFE mold

Cathode/SE/Li-In

O-ling

insulator

Al foil
Al mesh
Cathode composite
Solid electrolyte
In foil
Li foil
Cu mesh

FIG. 2a

FIG. 2b

FIG. 3a

FIG. 3b

FIG. 4a

FIG. 4b

FIG. 5

FIG. 6

FIG. 7

FIG. 8

## INTERNATIONAL SEARCH REPORT

| International application No. |
| --- |
| **PCT/KR2023/004408** |

**A.    CLASSIFICATION OF SUBJECT MATTER**

**H01M 4/525**(2010.01)i; **H01M 4/131**(2010.01)i; **H01M 4/1391**(2010.01)i; **H01M 4/505**(2010.01)i; **H01M 10/0562**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/525(2010.01); H01M 10/0562(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체전지(all-solid-battery), 고체전해질(solid-electrolyte), 양극활물질(cathode-active-materials), 잔류리튬(residual-lithium), 황화물계(sulfide), 고함량니켈(nickel-rich), 버퍼층(bufferfilm), 계면(interfacial)

**C.    DOCUMENTS CONSIDERED TO BE RELEVANT**

| Category* | Citation of document, with indication, where appropriate, of the relevant passages | Relevant to claim No. |
| --- | --- | --- |
| X | ZHANG, Y. et al. Self-Stabilized LiNi0.8Mn0.1Co0.1O2 in thiophosphate-based all-solid-state batteries through extra LiOH. Energy Storage Materials. 2021, vol. 41, pp. 505-514 (published online: 18 June 2021).   See abstract, pages 505-507 and 513, and Figure 1. | 1-10 |
| X | KR 10-2015-0062989 A (IUCF-HYU (INDUSTRY-UNIVERSITY COOPERATION FOUNDATION HANYANG UNIVERSITY)) 08 June 2015 (2015-06-08)   See paragraphs [0077]-[0085], claims 1 and 2, and figures 11 and 12. | 1-10 |
| A | PENG, L. et al. LiNbO3-coated LiNi0.7Co0.1Mn0.2O2 and chlorine-rich argyrodite enabling high-performance solid-state batteries under different temperatures. Energy Storage Materials. 2021, vol. 43, pp. 53-61 (published online: 27 August 2021).   See abstract, and pages 53 and 60. | 1-10 |
| A | TAKADA, K. et al. Interfacial modification for high-power solid-state lithium batteries. Solid States Ionics. 2008, vol. 179, pp. 1333-1337.   See abstract, and pages 1333 and 1337. | 1-10 |

☑ Further documents are listed in the continuation of Box C.          ☑ See patent family annex.

| | |
| --- | --- |
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **07 July 2023** | **07 July 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/004408** |

**C.    DOCUMENTS CONSIDERED TO BE RELEVANT**

| Category* | Citation of document, with indication, where appropriate, of the relevant passages | Relevant to claim No. |
| --- | --- | --- |
| A | BOARETTO, N. et al. Lithium solid-state batteries: State-of-the-art and challenges for materials, interfaces and processing. Journal of Power Sources. 2021, vol. 502, thesis no. 229919, inner pp. 1-34 (published online: 11 May 2021). See inner pages 4, 7 and 9. | 1-10 |
| PX | KANG, S. et al. Beneficial Role of Inherently Formed Residual Lithium Compounds on the Surface of Ni-Rich Cathode Materials for All-Solid-State Batteries. Applied Materials and Interfaces. 2023, vol. 15, pp. 10744-10751 (publication date 14 February 2023). See abstract, and pages 10744 and 10749. | 1-10 |

Form PCT/ISA/210 (second sheet) (July 2022)

**INTERNATIONAL SEARCH REPORT**
Information on patent family members

International application No.

**PCT/KR2023/004408**

| Patent document cited in search report | | | Publication date (day/month/year) | Patent family member(s) | | | Publication date (day/month/year) |
|---|---|---|---|---|---|---|---|
| KR | 10-2015-0062989 | A | 08 June 2015 | CN | 105830260 | A | 03 August 2016 |
| | | | | CN | 105830260 | B | 26 October 2018 |
| | | | | KR | 10-1792316 | B1 | 31 October 2017 |
| | | | | US | 10050258 | B2 | 14 August 2018 |
| | | | | US | 2017-0309890 | A1 | 26 October 2017 |
| | | | | WO | 2015-080502 | A1 | 04 June 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220040830

- KR 1020180081309

**Non-patent literature cited in the description**

- **N. OHTA ; K. TAKADA ; I. SAKAGUCHI ; L. ZHANG ; R. MA ; K. FUKUDA ; M. OSADA ; T. SASAKI.** *Electrochemistry Communication,* 2007, vol. 9, 1486-1490

- **N. OHTA ; K. TAKADA ; L. ZHANG ; R. MA ; M. OSADA ; T. SASAKI.** *Advanced Material,* 2006, vol. 18, 2226-2229